# EUROPEAN PATENT SPECIFICATION

(11) **EP 3 336 578 B1**
(45) Date of publication and mention of the grant of the patent: **27.05.2020**
(21) Application number: 16835432.2
(22) Date of filing: 10.08.2016
(51) Int. Cl.: H04W 64/00, G01S 5/02

(54) **DEVICE AND METHOD FOR ESTIMATING POSITION OF TERMINAL IN WIRELESS COMMUNICATION SYSTEM**
VORRICHTUNG UND VERFAHREN ZUR POSITIONSSCHÄTZUNG EINES ENDGERÄTS IN EINEM DRAHTLOSKOMMUNIKATIONSSYSTEM
DISPOSITIF ET PROCÉDÉ D'ESTIMATION DE POSITION DE TERMINAL DANS UN SYSTÈME DE COMMUNICATION SANS FIL

(30) Priority: 13.08.2015 KR 20150114642
(43) Date of publication of application: 20.06.2018
(73) Proprietor: Samsung Electronics Co., Ltd., Suwon-si, Gyeonggi-do 16677 (KR)
(72) Inventor: YOON, Soonyoung, Seoul 05572 (KR); OH, Chang-Yeong, Suwon-si Gyeonggi-do 16620 (KR); YOUN, Iljin, Bucheon-si Gyeonggi-do 14587 (KR); LEE, Suwon, Suwon-si Gyeonggi-do 16712 (KR)
(74) Representative: Nederlandsch Octrooibureau
(86) International application number: PCT/KR2016/008788
(87) International publication number: WO 2017/026792

(56) References cited:
- KR-A- 20050 054 926
- KR-A- 20080 062 202
- KR-A- 20100 030 405
- KR-A- 20150 049 633
- KR-A- 20150 058 412
- US-A1- 2003 119 524
- US-A1- 2003 139 188
- US-A1- 2004 180 671
- US-A1- 2015 087 340

## Description

### Technical Field

The present invention relates to location estimation of a terminal in a wireless communication system.

### Background Art

Recently, services based on location information are provided in various devices, including a smart phone or the like. The service based on the location information can be provided under the assumption that a corresponding device has a location estimation function. For the location estimation, an additional device such as a Global Positioning System (GPS) receiver may be used, or a signal received form an access node such as a base station or the like may be used. For example, triangulation using signals from three or more base stations may be used.

However, since a communication system has recently been developed in various forms, there may be a situation where it is difficult to directly apply the conventional location estimation scheme. For example, a plurality of radio units may exist for one base station, and the plurality of radio units may be disposed in a geographically distributed manner. In this case, since a location of a signal source is not specified as one location, there may be difficulty in location estimation.

US 2003/139188 A1 discloses a geolocation method using a time advance TA value and a signal strength measurements by a mobile station MS. A timing advance principles are used to determine an approximate location of MS. Specifically, a predicted area associated with the received TA value for MS is determined. Then, the received signal strength measurements associated with same cell-neighboring sectors are used to determine a location for MS.

### Disclosure of Invention

### Technical Problem

An exemplary embodiment of the present invention provides an apparatus and method for estimating a location of a terminal in a wireless communication system.

Another exemplary embodiment of the present invention provides an apparatus and method for estimating a location of a terminal when a base station consists of a plurality of radio units.

Another exemplary embodiment of the present invention provides an apparatus and method for determining a radio unit to which a terminal has access when a base station consists of a plurality of radio units in a wireless communication system.

Another exemplary embodiment of the present invention provides an apparatus and method for estimating a location of a terminal based on a propagation time of a signal and a signal strength pattern in a wireless communication system.

### Solution to Problem

In accordance with the present invention, respective method, apparatus and system for estimating the location of a terminal, as set forth in the independent claims are provided. Embodiments of the invention are claimed in the dependent claims. According to an exemplary embodiment of the present invention, a method of estimating a location of a terminal in a wireless communication system includes determining candidate regions based on a propagation time of a signal between the terminal and a radio unit, and determining at least one region among the candidate regions as the location of the terminal according to a signal strength pattern measured by the terminal for a serving cell and at least one neighbor cell.

According to an exemplary embodiment of the present invention, an apparatus for estimating a location of a terminal in a wireless communication system includes a processor for determining candidate regions based on a propagation time of a signal between the terminal and a radio unit, and for determining at least one region among the candidate regions as the location of the terminal according to a signal strength pattern measured by the terminal for a serving cell and at least one neighbor cell.

Since a location of a terminal is estimated by considering a characteristic of an operation of a cell consisting of a plurality of radio units using the same cell identifier in a wireless communication system, an estimation location range for the terminal can be decreased in an environment where a base station uses the same cell identifier, or a location having a highest possibility can be selected as the estimation location of the terminal.

### Advantageous Effects of Invention

FIG. 1 illustrates a wireless communication system according to an exemplary embodiment of the present invention;
FIG. 2 illustrates a structure of a positioning module in a wireless communication system according to an exemplary embodiment of the present invention;
FIG. 3 illustrates a procedure of operating a positioning module in a wireless communication system according to an exemplary embodiment of the present invention;
FIG. 4 illustrates an example of determining regions based on a propagation time of a signal in a wireless communication system according to an exemplary embodiment of the present invention;
FIG. 5A and FIG. 5B illustrate an example of determining a region based on a signal strength pattern in a wireless communication system according to an exemplary embodiment of the present invention;
FIG. 6 illustrates a situation where a serving cell consists of a plurality of radio units, and neighbor cells consist of one radio unit in a wireless communication system according to an exemplary embodiment of the present invention;
FIG. 7 illustrates an example of a result of selecting a candidate region in a wireless communication system according to an exemplary embodiment of the present invention;
FIG. 8A and FIG. 8B illustrate a signal strength measurement and location estimation result in a wireless communication system according to an exemplary embodiment of the present invention;
FIG. 9A and FIG. 9B illustrate a situation where a serving cell and neighbor cells consist of a plurality of radio units in a wireless communication system according to an exemplary embodiment of the present invention; and
FIG. 10 illustrates a procedure of operating a positioning module in a wireless communication system according to an exemplary embodiment of the present invention.

### Best Mode for Carrying out the Invention

The present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on user's or operator's intension and usage. That is, the terms used herein must be understood based on the descriptions made herein.

Hereinafter, the present invention describes a technique for estimating a location of a terminal in a wireless communication system.

Terms referring to network entities, control information, constitutional elements of a device, a unit of geographical locations, or the like used in the following description are exemplified for convenience of explanation. Therefore, the present invention is not limited to the terms described below, and other terms having identical technical meanings may also be used.

For convenience of explanation, some terms and names defined in a 3^{rd} Generation Partnership Project (3GPP) standard may be used in the present invention. However, the present invention is not limited to the above terms and names, and thus may also be equally applied to a system conforming to another standard.

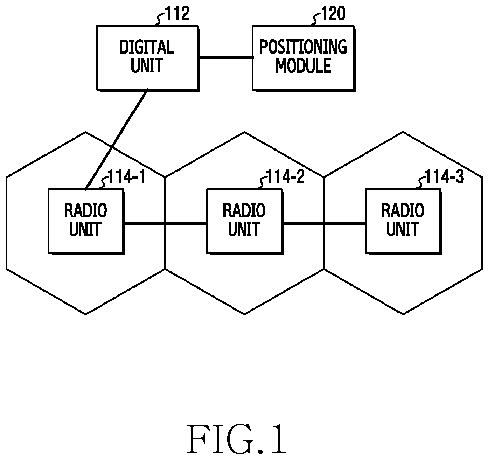

FIG. 1 illustrates a wireless communication system according to an exemplary embodiment of the present invention. A base station including a plurality of radio units is exemplified in FIG. 1. Although only one base station is illustrated in FIG. 1, two or more base stations may be present.

Referring to FIG. 1, for the purpose of extending a communication coverage, a plurality of radio units 114-1, 114-2, and 114-3 may be extended/connected to a digital unit 112. In this case, the plurality of radio units 114-1, 114-2, and 114-3 may be connected in a cascade form. The digital unit 112 and the plurality of radio units 114-1, 114-2, and 114-3 constitute one base station. The digital unit 112 performs a function of data modulation/decoding, channel coding/decoding, scheduling, digital signal processing, or the like, and the plurality of radio units 114-1, 114-2, and 114-3 transmit and receive a signal with respect to a terminal through a radio channel. The digital unit 112 may be referred to as a data unit, and each of the radio units 114-1, 114-2, and 114-3 may be referred to as a Radio Remote Head (RRH). A connection between the digital unit 112 and the plurality of radio units 114-1, 114-2, and 114-3 may be based on a Common Public Radio Interface (CPRI).

In addition, a system includes a positioning module 120. The positioning module 120 performs functions required to estimate a location of the terminal. For example, the positioning module 120 collects information required to estimate the location, and estimates the location of the terminal based on the collected information. The positioning module 120 may be implemented as a separate network entity, as one part of the digital unit 112, or as one part of another network entity (e.g., a Mobility Management Entity (MME), etc.). Alternatively, the positioning module 120 may be implemented as one part of the terminal or as one part of any one of the plurality of radio units 114-1, 114-2, and 114-3. In addition, some or all of functions for the location estimation of the positioning module 120 may be performed by at least one different object.

The plurality of radio units 114-1, 114-2, and 114-3 may operate in a repeater mode. The repeater mode implies an operation mode in which the plurality of radio units 114-1, 114-2, and 114-3 transmit the same signal. In downlink communication, the plurality of radio units 114-1, 114-2, and 114-3 operating in the repeater mode perform a buffering operation for Radio Frequency (RF) transmission at the same time point. In addition, in uplink communication, irrespective of to which node the terminal currently has access, the plurality of radio units 114-1, 114-2, and 114-3 operating in the repeater mode perform a buffering operation for adjusting a reception synchronization in the digital unit 112. Therefore, the digital unit 112 and the upper node cannot know to which node the plurality of radio units 114-1, 114-2, and 114-3 currently have access. In addition, since coverages of the plurality of radio units 114-1, 114-2, and 114-3 are managed by using the same cell identifier, the terminal cannot know to which node the plurality of radio units 114-1, 114-2, and 114-3 currently have access.

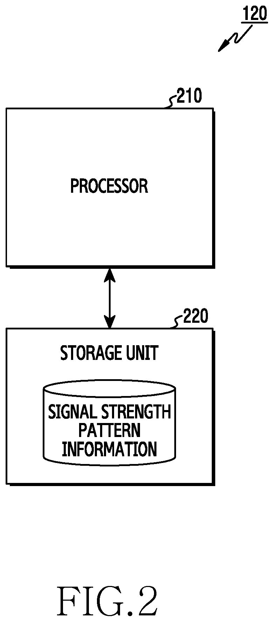

FIG. 2 illustrates a structure of a positioning module in a wireless communication system according to an exemplary embodiment of the present invention. A structure of the positioning module 120 is exemplified in FIG. 2. Hereinafter, the term '... unit', '... device', or the like implies a unit of processing at least one function or operation, and may be implemented in hardware or software or in combination of the hardware and the software.

Referring to FIG. 2, the positioning module 120 includes a processor 210 and a storage unit 220. The processor 210 controls an operation of the positioning module 120. The storage unit 220 stores data such as a basic program, configuration information, or the like for an operation of the positioning module 120. The storage unit 220 may consist of a volatile memory, a non-volatile memory, or a combination of the volatile memory and the non-volatile memory. In particular, the storage unit 220 stores signal strength pattern information. As data used for location estimation, the signal strength pattern information indicates geographical regions corresponding to signal strength patterns. Herein, the region may be referred to as a 'bin' as a unit for indicating a location. In addition, although not shown in FIG. 2, the positioning module 120 may further include a receiver for receiving information required to estimate the location of the terminal.

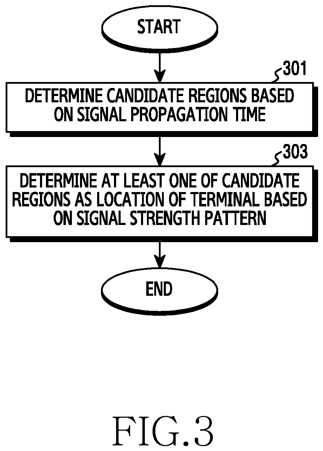

FIG. 3 illustrates a procedure of operating a positioning module in a wireless communication system according to an exemplary embodiment of the present invention. A method of operating the positioning module 120 is exemplified in FIG. 3.

Referring to FIG. 3, in step 301, the positioning module 120 determines candidate regions based on a propagation time of a signal. The propagation time of the signal between a terminal and a radio unit is in proportion to a distance between the terminal and the radio unit. Therefore, the positioning module 120 may estimate a distance between a signal source (e.g., the radio unit) and the terminal based on the propagation time of the signal. In addition, the positioning module 120 may determine candidate regions based on the distance. In this case, since a plurality of radio units are present, a plurality of signal sources are considered, and candidate region groups corresponding to the respective signal sources are determined. For example, one candidate region group may be determined for each radio unit.

Thereafter, proceeding to step 303, the positioning module 120 determines at least one of the candidate regions as a location of the terminal based on a signal strength pattern. The signal strength pattern implies a combination of signal strengths for at least one neighbor cell including a serving cell. Since a distance relation between the serving cell and at least one neighbor cell varies depending on a specific region in which the terminal is located, the signal strength pattern measured in the terminal varies. Therefore, the positioning module 120 may compare predefined signal strength pattern information (e.g., a list of signal strength patterns) with the signal strength pattern measured by the terminal to determine a region in which the terminal is located. Specifically, the positioning module 120 confirms signal strength patterns corresponding to candidate regions from the predefined signal strength pattern information. In addition, the positioning module 120 may search for at least one pattern based on a likelihood with respect to the confirmed signal strength patterns and the signal strength pattern measured by the terminal, and confirm a corresponding region.

According to one exemplary embodiment of the present invention, the positioning module 120 may determine only a region having a maximum likelihood as the location of the terminal. In this case, in general, only one region is determined as the location of the terminal.

In addition, according to another exemplary embodiment of the present invention, the positioning module 120 may determine at least one region having a likelihood greater than or equal to a specific level as the location of the terminal. Herein, the likelihood may be defined in various manners. For example, it may be determined such that the likelihood is determined based on per-cell difference values between the predefined signal strength pattern and the measured signal strength pattern. In this case, the positioning module 120 may calculate a likelihood of a signal strength pattern for each candidate region, and may determine at least one candidate region having a likelihood greater than or equal to a threshold as the location of the terminal. Hereinafter, for convenience of explanation, a 'region/candidate region having a likelihood greater than or equal to a specific level' is referred to as an 'excellent candidate region'.

Alternatively, according to another exemplary embodiment of the present invention, the positioning module 120 may determine at least one candidate region of which a likelihood difference is not great among the excellent candidate regions as the location of the terminal. In other words, the positioning module 120 may determine at least one region of which a likelihood difference is less than or equal to a second threshold among candidate regions having a likelihood greater than or equal to a first threshold as the location of the terminal. Herein, even in case of the excellent candidate regions, some candidate regions may not be selected according to a difference of a likelihood between the candidate regions.

According to the exemplary embodiments described with reference to FIG. 3, in step 303, the positioning module 120 examines a signal strength pattern corresponding to all candidate regions without consideration of a radio unit. In this case, if a criterion for determining a location is defined as a likelihood greater than or equal to a specific level, two or more regions may be defined as the location of the terminal. Further, two or more regions belonging to coverages of different radio units may be determined as the location of the terminal. In this case, there is a problem in that it is difficult to specify a specific radio unit to which the terminal currently has access. Therefore, according to another exemplary embodiment of the present invention, candidate regions that can be determined as a final location of the terminal may be limited to at least one candidate region group included in a coverage of one radio unit.

The candidate regions may be limited in various manners. According to one exemplary embodiment, the positioning module 120 may consider only a candidate region group including a candidate region having a maximum likelihood. In this case, a candidate region not included in the candidate region group including the candidate region having the maximum likelihood is not selected as the location of the terminal even if the candidate region has the likelihood greater than or equal to the specific level. According to another exemplary embodiment, the positioning module 120 may calculate the number of candidate regions having the likelihood greater than or equal to the specific level among the respective candidate region groups, and may consider only a candidate region group including the greatest number of candidate regions having the likelihood greater than or equal to the specific level.

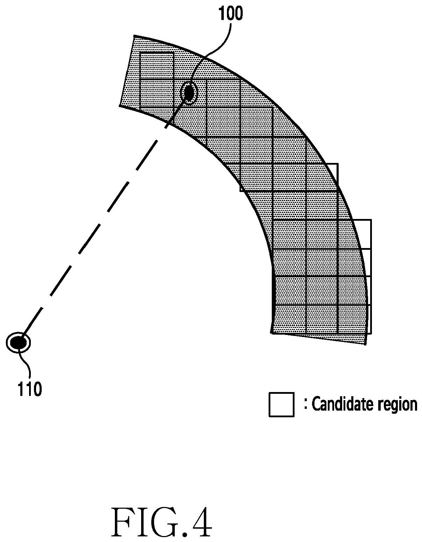

In step 301 of FIG. 3, the determining of the candidate region based on the propagation time of the signal may be performed as shown in FIG. 4. FIG. 4 illustrates an example of determining regions based on a propagation time of a signal in a wireless communication system according to an exemplary embodiment of the present invention. As shown in FIG. 4, if a base station 110 and a terminal 100 perform communication, for an uplink synchronization of terminals distributed at different distances from the base station 110, a procedure for compensating for transmission timing of the terminal 100 by a Round-Trip Time (RTT) between the base station 110 and the terminal 100 may be performed. In case of an LTE system, a compensation value for the RTT is exchanged through control information which is referred to as a 'Timing Advance (TA)'. The TA is control information provided from the base station 110 to the terminal 100. According to an LTE standard, 1 the TA indicates 0.52µsec, which corresponds to about 78m in a one-way case. Therefore, a distance between the terminal 100 and the base station 110 may be estimated from TA information. However, since the TA does not provide angle information between the terminal 100 and the base station 110, the location of the terminal 100 cannot be accurately determined in a cell region when using only the TA. Accordingly, as shown in FIG. 4, candidate regions distributed at locations separated by a specific distance from the base station 110 may be determined.

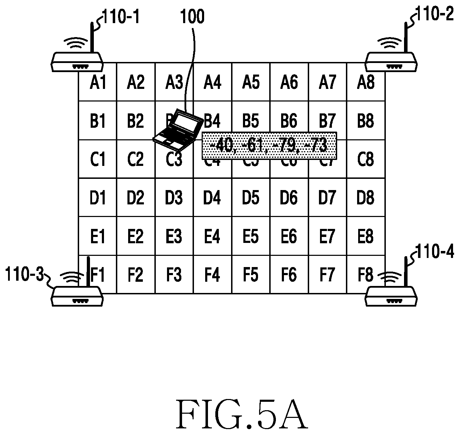

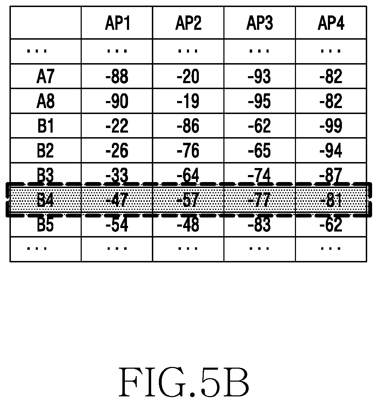

In step 303 of FIG. 3, the determining of the location based on the signal strength pattern may be performed as shown in FIG. 5A and FIG. 5B. FIG. 5A and FIG. 5B illustrate an example of determining a region based on a signal strength pattern in a wireless communication system according to an exemplary embodiment of the present invention. A case of selecting only region is exemplified in FIG. 5A and FIG. 5B. Referring to FIG. 5A and FIG. 5B, in a situation where regions are divided as shown in FIG. 5A, a radio map predefined by measuring a propagation characteristic value in each region in advance as shown in FIG. 5B may be used. That is, the radio map is provided to the positioning module 120 after being converted in a database form, and the positioning module 120 compares the currently measured propagation characteristic value and a database value to determine an estimation location according to a likelihood. For example, a Bayesian theory may be utilized to decide a likelihood level. A location coordinate may be divided according to a bin identifier in unit of a bin by using a global bin-map configuration. Such a method is referred to as 'fingerprinting'.

Specifically, in an environment where a location coordinate is used in unit of a bin, an example of applying a fingerprinting scheme in a Wireless Local Area Network (WLAN) environment is as follows. A radio map may be defined according to a Received Signal Strength Indication (hereinafter, RSSI) measured for each bin from neighbor Access Points (APs) 110-1, 110-2, 110-3, and 110-4, and the positioning module 120 compares the radio map with the currently measured propagation characteristic value so that a bin having a maximum likelihood is estimated as the location of the terminal 100. In case of FIG. 5A and FIG. 5B, a measurement value is {-40, -61, -79, -73}, and a region B4 defined as {-47, -57, -77, -81} is estimated as the location of the terminal 100. Similarly, in a cellular system such as the LTE system, the location of the terminal may also be estimated by comparing Measurement Report (MR) information and the radio map.

As described above, for a plurality of radio units using the same cell identifier, the positioning module 120 according to the exemplary embodiment of the present invention applies fingerprinting and distance estimating between a transmitting end and a receiving end based on a propagation time of a signal (e.g., TA) per coverage of each of the radio units. Therefore, the location estimation method according to the exemplary embodiment of the present invention may include determining a location candidate group of a positioning target terminal, that is, a candidate region group, determining a radio unit to which a corresponding terminal currently has access among a plurality of radio units from per-coverage location candidate group information of each radio unit, and selecting a most suitable specific location or a plurality of location candidate groups in a service region of a corresponding radio unit. Alternatively, the location estimation method according to the exemplary embodiment of the present invention may include searching for a location candidate group having a likelihood greater than or equal to a specific level by applying distance estimating and fingerprinting based on a propagation time of a signal with respect to the entire coverage by means of a plurality of radio units using the same cell identifier, and selecting a most suitable specific location or a plurality of location candidate groups in a corresponding location candidate group.

Hereinafter, estimating of a location according to the present invention is described by taking a specific example.

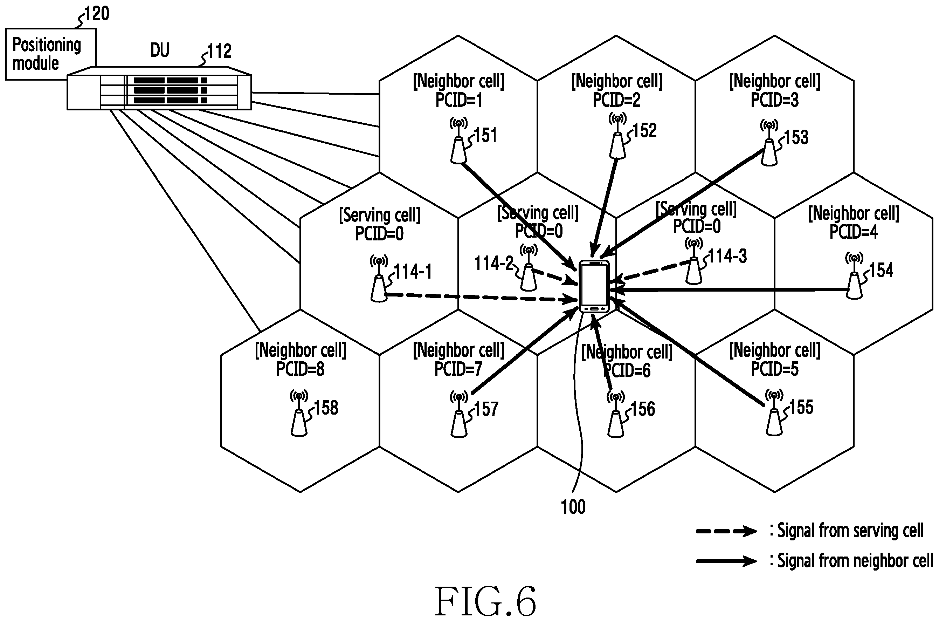

FIG. 6 illustrates a situation where a serving cell consists of a plurality of radio units, and neighbor cells consist of one radio unit in a wireless communication system according to an exemplary embodiment of the present invention. An environment where the positioning module 120 capable of receiving information of inputs required for positioning from the digital unit 112 is equipped in a system is exemplified in FIG. 6.

Referring to FIG. 6, the positioning module 120 may be one part of the digital unit 112, or may communicate with the digital unit 112 as a separate object or one part of another object. The serving cell consists of the plurality of radio units 114-1, 114-2, and 114-3 having the same cell identifier. There are a plurality of neighbor cells, and each neighbor cell consists of one radio unit using a different cell identifier. Specifically, there are a neighbor cell#1 consisting of a radio unit 151 using a Physical Cell IDdentifier (PCID) 1, a neighbor cell#2 consisting of a radio unit 152 using a PCID 2, a neighbor cell#3 consisting of a radio unit 153 using a PCID 3, a neighbor cell#4 consisting of a radio unit 154 using a PCID 4, a neighbor cell#5 consisting of a radio unit 155 using a PCID 5, a neighbor cell#6 consisting of a radio unit 156 using a PCID 6, a neighbor cell#7 consisting of a radio unit 157 using a PCID 7, and a neighbor cell#8 consisting of a radio unit 158 using a PCID 8.

The positioning module 120 may operate based on a global bin-map configuration. Input information may include at least one of location information (e.g., coordinate) per radio unit, antenna information (e.g., transmission power, beam lobe, height, tilt, etc.) per radio unit, coverages of radio units, a measurement report (e.g., a cell identifier, Reference Signal Received Power (RSRP)) of a positioning target terminal, and a TA of the positioning target terminal.

All of the radio units 114-1, 114-2, and 114-3 operate in a repeater mode, and use an omni-directional antenna. The terminal 100 measures RSRP of a combined signal for signals transmitted from the plurality of radio units 114-1 114-2, and 114-3 as a signal from the serving cell. Further, the terminal 100 also measures RSRP for neighbor cells. In addition, the terminal 100 applies RSRP for the serving cell and the neighbor cells to a measurement report, and reports it to the digital unit 112 through an uplink by using the radio units 114-1, 114-2, and 114-3. The digital unit 112 receives an uplink signal from the terminal 100, determines a TA, and provides it to the terminal 100. The digital unit 112 provides the positioning module 120 with the TA and a measurement report of a specific terminal. Accordingly, the positioning module 120 acquires information regarding a signal strength pattern and a propagation time of a signal for the terminal 100.

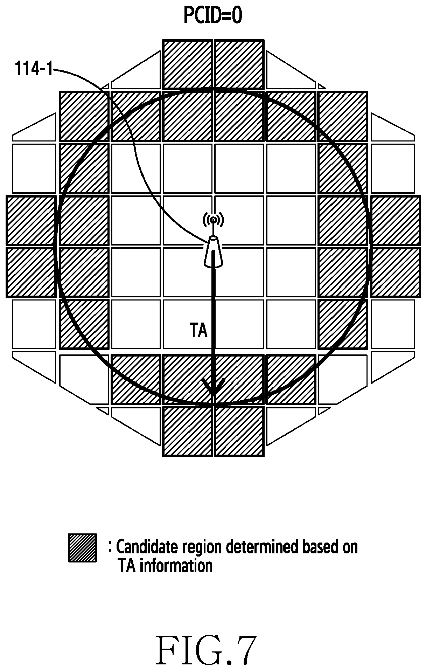

Next, the positioning module 120 searches for candidate regions in which the terminal 100 can be located by using a TA value under the assumption that the terminal 100 is located in one coverage among the radio units 114-1, 114-2, and 114-3 based on the TA value. For example, the candidate regions may be determined as shown in FIG. 7. FIG. 7 illustrates an example of a result of selecting a candidate region in a wireless communication system according to an exemplary embodiment of the present invention. Referring to FIG. 7, one candidate region group is determined for the radio unit 114-1. Candidate regions belonging to a specific range from an estimation distance determined by a TA are included in a candidate region group corresponding to the radio unit 114-1.

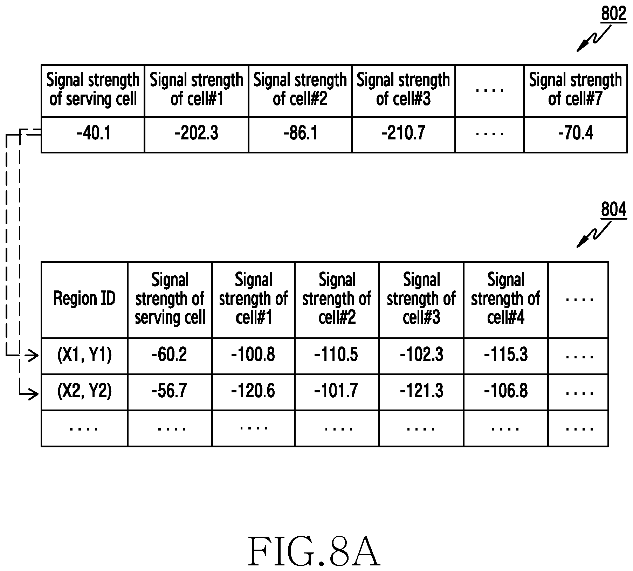

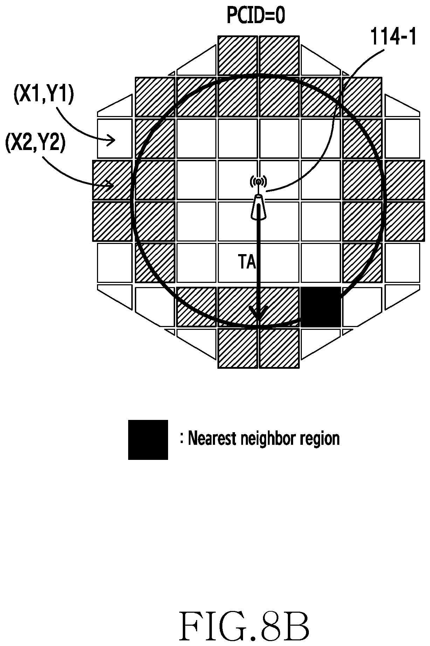

Subsequently, for the candidate region group corresponding to the radio unit 114-1, the positioning module 120 compares a signal strength pattern configured through a measurement report of the terminal 100 and a radio map database based on a fingerprinting scheme. That is, the positioning module 120 searches for a candidate region having a maximum likelihood with respect to a signal strength pattern measured by the terminal 100. The candidate region having the maximum likelihood may be determined as shown in FIG. 8A and FIG. 8B. FIG. 8A and FIG. 8B illustrate a signal strength measurement and location estimation result in a wireless communication system according to an exemplary embodiment of the present invention. Referring to FIG. 8A, a signal strength pattern 802 measured by the terminal 100 is {-40.1, -202.3, -86.1, -201.7, ..., - 70.4}. The measured signal strength pattern 802 is compared with candidate region patterns among patterns included in a radio map database 804. Accordingly, as shown in FIG. 8B, one candidate region having a maximum likelihood is selected. In this case, if there are a plurality of candidate regions of which a likelihood difference is not great while having a likelihood greater than or equal to a specific level according to a likelihood between the signal strength pattern 802 measured by the terminal 100 and the radio map database 804, all of the plurality of candidate regions may be considered as candidate regions that can be finally selected.

Next, the positioning module 120 performs a similar procedure with respect to the remaining radio units 114-2 and 114-3. That is, the positioning module 120 searches for a candidate region having a maximum likelihood for each radio unit by applying candidate group searching and fingerprinting schemes based on a TA with respect to the remaining radio units 114-2 and 114-3. However, according to another exemplary embodiment of the present invention, the positioning module 120 may perform procedures for all of the radio units 114-1, 114-2, and 114-3 in parallel. For example, after determining candidate region groups for the radio units 114-1, 114-2, and 114-3, the positioning module 120 may perform a radio map database searching operation sequentially for each candidate region group or concurrently for all candidate region groups.

Next, the positioning module 120 selects a radio unit to which the terminal currently has access. The positioning module 120 may select a radio unit corresponding to a candidate region group including a candidate region having a maximum likelihood as the accessed radio unit among all candidate regions. For example, if a candidate region having a maximum likelihood among candidate region groups corresponding to a radio unit 114-1 has a likelihood of L₁, if a candidate region having a maximum likelihood among candidate region groups corresponding to a radio unit 114-2 has a likelihood of L₂, if a candidate region having a maximum likelihood among candidate region groups corresponding to a radio unit 114-3 has a likelihood of L₃, and if Li is greater than L₂ and L₃, then the positioning module 120 selects the radio unit 114-1 as the accessed radio unit. Alternatively, the positioning module 120 may select a radio unit corresponding to a candidate region group including the greatest number of candidate regions having a likelihood greater than or equal to a specific level as the accessed radio unit. For example, if the number of candidate regions having the likelihood greater than or equal to the specific level among candidate region groups corresponding to the radio unit 114-1 is N₁, if the number of candidate regions having the likelihood greater than or equal to the specific level among candidate region groups corresponding to the radio unit 114-2 is N₂, if the number of candidate regions having the likelihood greater than or equal to the specific level among candidate region groups corresponding to the radio unit 114-3 is N₃, and if Ni is greater than N₂ and N₃, then the positioning module 120 selects the radio unit 114-1 as the accessed radio unit.

Subsequently, the positioning module 120 selects a final estimation location. The positioning module 120 selects a candidate region having a maximum likelihood in a coverage of the accessed radio unit. In addition, if there are a plurality of candidate regions of which a likelihood is greater than or equal to a specific level and a difference thereof is not great, the positioning module 120 may select the plurality of candidate regions as an estimation location of the terminal 100. In other words, a plurality of regions of which a likelihood is greater than or equal to a first threshold and a likelihood difference is less than or equal to a second threshold may be determined as an estimation location.

Alternatively, according to another exemplary embodiment of the present invention, the positioning module 120 may skip the selecting for the radio unit to which the terminal 100 has access. In this case, the positioning module 120 may search for an available location candidate group based on a TA value with respect to the coverages of all of the radio units 114-1, 114-2, and 114-3 constituting a cell, and thereafter may apply a fingerprinting scheme to the location candidate group so that all regions of which a difference between likelihoods is not great while having a likelihood of a specific level are selected as a result of location estimation. Accordingly, although there is an advantage in that steps are simplified, an estimation location may be generated in coverages of different radio units. In this case, disadvantageously, it may be difficult to determine a specific radio unit to which the terminal currently has access.

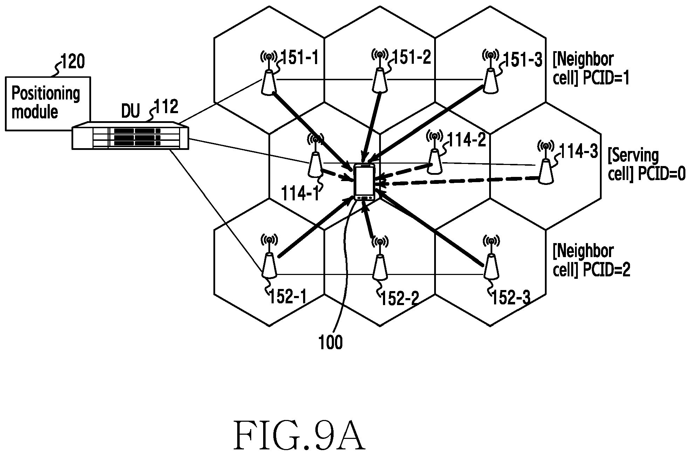

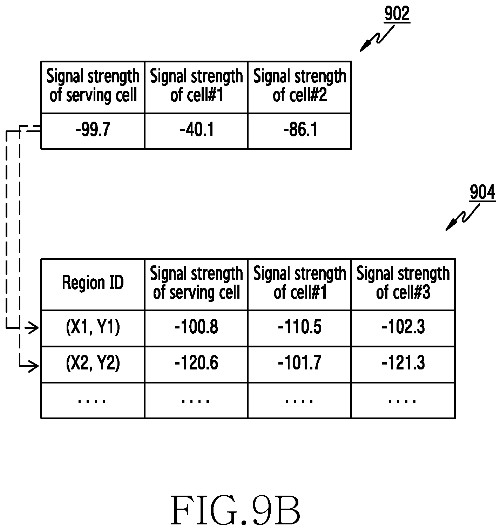

Unlike in FIG. 6, a situation where neighbor cells include a plurality of radio units is also possible. FIG. 9A and FIG. 9B illustrate a situation where a serving cell and neighbor cells consist of a plurality of radio units in a wireless communication system according to an exemplary embodiment of the present invention.

Referring to FIG. 9A, the positioning module 120 may be one part of the digital unit 112, or may communicate with the digital unit 112 as a separate object or one part of another object. The serving cell consists of the plurality of radio units 114-1, 114-2, and 114-3 having the same cell identifier. There are a plurality of neighbor cells, and each neighbor cell consists of a plurality of radio units. Specifically, there are a neighbor cell#1 consisting of radio units 151-1, 151-2, and 151-3 using a PCID 1 and a neighbor cell#2 consisting of radio units 152-1, 152-2, and 152-3 using a PCID 2. In case of FIG. 9A, a characteristic of a network environment needs to be applied to a radio map database based on fingerprinting. If RSRP of a combined signal for signals received from a plurality of radio units of a neighbor cell is applied to a radio map, since the RSRP of the combined signal will be included also in a measurement report of the terminal 100, a location of the terminal 100 may be estimated in the same manner as described above. That is, as shown in FIG. 9B, the positioning module 120 may estimate the location of the terminal 100 by using a signal strength pattern 902 based on the measurement report and a radio map 904 to which the RSRP of the combined signal is applied.

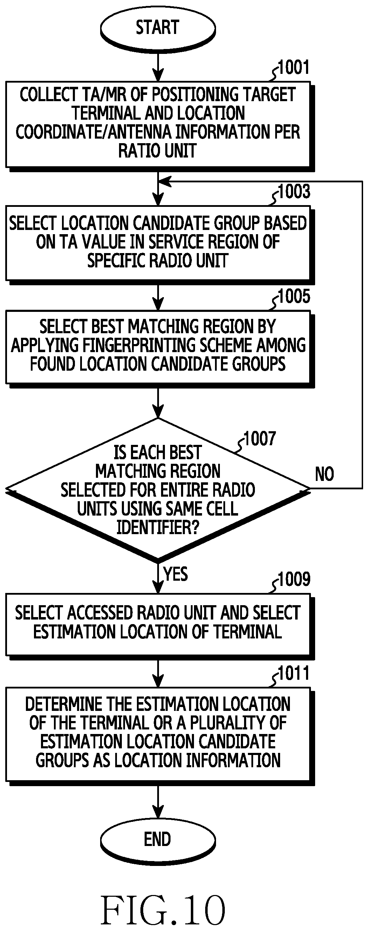

FIG. 10 illustrates a procedure of operating a positioning module in a wireless communication system according to an exemplary embodiment of the present invention. A method of operating the positioning module 120 is exemplified in FIG. 10.

Referring to FIG. 10, in step 1001, the positioning module 120 collects a TA and measurement report of a positioning target terminal, a location coordinate per radio unit, and antenna information per radio unit. At least one of the TA of the terminal, the location coordinate per radio unit, and the antenna information per radio unit may be received from a digital unit for controlling the radio unit. The TA and the measurement report are values which vary depending on the location of the terminal, and thus may be provided after the positioning target terminal is specified. However, the location coordinate per radio unit and the antenna information per radio unit are determined together when the radio unit is installed, and thus may be provided in advance.

Subsequently, proceeding to step 1003, the positioning module 120 selects a location candidate group based on a TA value in a service region of a specific radio unit. In other words, the positioning module 120 determines candidate regions in which the terminal can be located by using the TA value under the assumption that the terminal is located in a coverage of any one of the radio units. Candidate regions belonging to a specific region from an estimation distance determined by the TA are included in a candidate region group corresponding to the specific radio unit.

Subsequently, proceeding to step 1005, the positioning module 120 selects a best matching region by applying a fingerprinting scheme among found location candidate groups. In other words, with respect to the candidate region group corresponding to the specific radio group, the positioning module 120 compares a signal strength pattern confirmed through the measurement report of the terminal with the radio map database based on the fingerprinting scheme. In addition, the positioning module 120 determines a candidate region having a maximum likelihood with respect to the measured signal strength pattern.

Thereafter, proceeding to step 1007, the positioning module 120 determines whether each best matching region is selected for entire radio units using the same cell identifier. That is, the positioning module 120 determines a candidate region group for all radio units of the serving cell, and determines whether a candidate region having a maximum likelihood is determined for each radio unit. If the best matching region is not selected for each of the entire radio units, returning to step 1003, the positioning module 120 repeats steps 1003 and 1005 for a next radio unit.

On the other hand, if the best matching region is selected for each of the entire radio units, proceeding to step 1009, the positioning module 120 selects a radio unit to which the terminal has access, and selects an estimation location of the terminal. The positioning module 120 may select a radio unit corresponding to a candidate region group including a candidate region having a maximum likelihood or a radio unit corresponding to a candidate region group including the greatest number of candidate regions having a likelihood greater than or equal to a specific level as the accessed radio unit. In addition, the positioning module 120 may determine a candidate region having a maximum likelihood in a coverage of the access radio unit as the estimation location. Alternatively, if there are a plurality of candidate regions of which a likelihood is greater than or equal to a specific level and a difference thereof is not great, the positioning module 120 may select all of the plurality of candidate regions as the estimation location.

Thereafter, proceeding to step 1011, the positioning module 120 determines the estimation location of the terminal or a plurality of estimation location candidate groups as location information. Accordingly, the positioning module 120 may transmit or output the location information to a different object which requires the location information of the terminal.

Methods based on the embodiments disclosed in the claims and/or specification of the present invention can be implemented in hardware, software, or a combination of both.

When implemented in software, computer readable recording medium for storing one or more programs (i.e., software modules) can be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the present invention.

The program (i.e., the software module or software) can be stored in a random access memory, a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs) or other forms of optical storage devices, and a magnetic cassette. Alternatively, the program can be stored in a memory configured in combination of all or some of these storage media. In addition, the configured memory can be plural in number.

Further, the program can be stored in an attachable storage device capable of accessing the electronic device through a communication network such as the Internet, an Intranet, a Local Area Network (LAN), a Wide LAN (WLAN), or a Storage Area Network (SAN) or a communication network configured by combining the networks. The storage device can have an access to a device for performing an exemplary embodiment of the present invention via an external port. In addition, an additional storage device on a communication network can have an access to the device for performing the exemplary embodiment of the present invention.

In the aforementioned specific exemplary embodiments, a constitutional element included in the invention is expressed in a singular or plural form according to the specific example embodiment proposed herein. However, the singular or plural expression is selected properly for a situation proposed for the convenience of explanation, and thus the various exemplary embodiments of the present invention are not limited to a single or a plurality of constitutional elements. Therefore, a constitutional element expressed in a plural form can also be expressed in a singular form, or vice versa.

## Claims

1. A method for estimating a location of a terminal (100) in a wireless communication system, the method comprising:
determining (301) candidate regions based on a propagation time of a signal between the terminal and a radio unit among a plurality of radio units (114-1,114-2,114-3;110;110-1,110-2,110-3,110-4;151,152,153,154,155,156,157,158) forming a serving cell, wherein the plurality of radio units of the serving cell use an identical cell identifier; and
determining (303) at least one region among the candidate regions as the location of the terminal according to a signal strength pattern measured by the terminal for the plurality of radio units of the serving cell and at least one radio unit of at least one neighbor cell.

2. The method of claim 1,
wherein the candidate regions comprise a plurality of candidate region groups corresponding to the plurality of radio units, and
wherein the determining of the at least one region as the location of the terminal comprises determining the location of the terminal among candidate regions belonging to a coverage of one of the plurality of radio units.

3. The method of claim 2, wherein the determining of the at least one region as the location of the terminal comprises,
selecting a radio unit corresponding to a coverage including a candidate region having a maximum likelihood as the one of the plurality of radio units.

4. The method of claim 2 wherein the determining of the at least one region as the location of the terminal comprises,
selecting a radio unit corresponding to a coverage including the greatest number of candidate region having a likelihood greater than or equal to a threshold as the one of the plurality of radio units.

5. The method of claim 1, further comprising receiving information regarding the propagation time of the signal and the signal strength pattern.

6. An apparatus for estimating a location of a terminal (100) in a wireless communication system, the apparatus comprising:
a processor (210) is configured to:
determine (301) candidate regions based on a propagation time of a signal between the terminal and a radio unit among a plurality of radio units (114-1,114-2,114-3;110;110-1,110-2,110-3,110-4;151,152,153,154,155,156,157,158) forming a serving cell, wherein the plurality of radio units of the serving cell use an identical cell identifier and
determine (303) at least one region among the candidate regions as the location of the terminal according to a signal strength pattern measured by the terminal for the plurality of radio units of the serving cell and at least one radio unit of at least one neighbor cell.

7. The apparatus of claim 6,
wherein the candidate regions comprise a plurality of candidate region groups corresponding to the plurality of radio units comprising the radio unit, and
wherein the processor is further configured to determine the location of the terminal among candidate regions belonging to a coverage of one of the plurality of radio units.

8. The apparatus of claim 7, wherein the processor is further configured to select a radio unit corresponding to a coverage comprising a candidate region having a maximum likelihood as the one of the plurality of radio units.

9. The apparatus of claim 7, wherein the processor is further configured to select a radio unit corresponding to a coverage comprising the greatest number of candidate region having a likelihood greater than or equal to a threshold as the one of the plurality of radio units.

10. The method of claim 1 or the apparatus of claim 6, wherein the propagation time of the signal is determined from timing advance, TA, information.

11. The method of claim 1 or the apparatus of claim 6, wherein the at least one region comprises at least one region of which a likelihood with respect to the signal strength pattern is greater than or equal to a first threshold among predefined signal strength patterns corresponding to the candidate regions.

12. The method of claim 1 or the apparatus of claim 6, wherein the at least one region comprises a plurality of regions of which a likelihood with respect to the signal strength pattern is greater than or equal to a first threshold and a mutual likelihood difference is less than or equal to a second threshold among predefined signal strength patterns corresponding to the candidate regions.

13. The apparatus of claim 6, further comprising a receiver for receiving information regarding the propagation time of the signal and the signal strength pattern.

14. A wireless communication system comprising:
a base station (110) comprising a plurality of radio units forming a serving cell, wherein the plurality of radio units of the serving cell use an identical cell identifier;
a terminal (100) for transmitting information regarding a propagation time of a signal and a signal strength pattern to the base station through one of the plurality of radio units; and
a positioning module (120) for estimating a location of the terminal based on the propagation time of the signal and the signal strength pattern,
wherein the positioning module is configured to:
determine candidate regions based on the propagation time of the signal between the terminal and a radio unit among the plurality of radio units, and
determine at least one region among the candidate regions as the location of the terminal according to signal strength values comprised in the signal strength pattern for the plurality of radio units of the serving cell of the terminal and at least one radio unit of at least one neighbor cell.

## Patentansprüche

1. Verfahren zur Positionsschätzung eines Endgeräts (100) in einem drahtlosen Kommunikationssystem, wobei das Verfahren Folgendes umfasst:
Bestimmen (301) von Kandidatenbereichen basierend auf einer Ausbreitungszeit eines Signals zwischen dem Endgerät und einer Funkeinheit unter einer Vielzahl von Funkeinheiten (114-1,114-2,114-3;110;110-1,110-2,110-3,110-4; 151,152,153,154,155,156,157,158) die eine bedienende Zelle bilden, wobei die Vielzahl von Funkeinheiten der bedienenden Zelle eine identische Zellenkennung verwenden; und
Bestimmen (303) mindestens eines Bereichs unter den Kandidatenbereichen als Standort des Endgeräts gemäß einem Signalstärkenmuster, das durch das Endgerät für die Vielzahl von Funkeinheiten der bedienenden Zelle gemessen wurde und mindestens eine Funkeinheit der mindestens einen Nachbarzelle.

2. Verfahren nach Anspruch 1,
wobei die Kandidatenbereiche eine Vielzahl von Kandidatenbereichsgruppen umfassen, die der Vielzahl von Funkeinheiten entsprechen, und
wobei das Bestimmen des mindestens einen Bereichs als Standort des Endgeräts das Bestimmen des Standorts des Endgeräts unter Kandidatenbereichen umfasst, die zu einer Abdeckung einer der Vielzahl von Funkeinheiten gehören.

3. Verfahren nach Anspruch 2, wobei das Bestimmen des mindestens einen Bereichs als Standort des Endgeräts Folgendes umfasst:
Auswählen einer Funkeinheit, die einer Abdeckung entspricht, die einen Kandidatenbereich enthält, der eine maximale Wahrscheinlichkeit als eine der Vielzahl von Funkeinheiten hat.

4. Verfahren nach Anspruch 2, wobei das Bestimmen des mindestens einen Bereichs als Standort des Endgeräts Folgendes umfasst:
Auswählen einer Funkeinheit, die einer Abdeckung entspricht, die die größte Anzahl von Kandidatenbereichen enthält, die eine Wahrscheinlichkeit haben, die gleich oder größer als ein Schwellenwert der Vielzahl von Funkeinheiten ist.

5. Verfahren nach Anspruch 1, das des Weiteren das Empfangen von Informationen bezüglich der Ausbreitungszeit des Signals und des Signalstärkenmusters umfasst.

6. Vorrichtung zur Positionsschätzung eines Endgeräts (100) in einem drahtlosen Kommunikationssystem, wobei die Vorrichtung Folgendes umfasst:
einen Prozessor (210), der konfiguriert ist zum:
Bestimmen (301) von Kandidatenbereichen basierend auf einer Ausbreitungszeit eines Signals zwischen dem Endgerät und einer Funkeinheit unter einer Vielzahl von Funkeinheiten (114-1,114-2,114-3;110;110-1,110-2,110-3,110-4;151,152,153,154,155,156,157,158) die eine bedienende Zelle bilden, wobei die Vielzahl von Funkeinheiten der bedienenden Zelle eine identische Zellenkennung verwenden und
Bestimmen (303) mindestens eines Bereichs unter den Kandidatenbereichen als Standort des Endgeräts gemäß einem Signalstärkenmuster, das durch das Endgerät für die Vielzahl von Funkeinheiten der bedienenden Zelle gemessen wird und mindestens eine Funkeinheit der mindestens einen Nachbarzelle.

7. Vorrichtung nach Anspruch 6,
wobei die Kandidatenbereiche eine Vielzahl von Kandidatenbereichsgruppen umfassen, die der Vielzahl von Funkeinheiten mit der Funkeinheit entsprechen, und
wobei der Prozessor des Weiteren konfiguriert ist, um den Standort des Endgeräts unter Kandidatenbereichen, die zu einer Abdeckung einer der Vielzahl von Funkeinheiten gehören, zu bestimmen.

8. Vorrichtung nach Anspruch 7, wobei der Prozessor des Weiteren konfiguriert ist, um eine Funkeinheit, die einer Abdeckung entspricht, auszuwählen, die einen Kandidatenbereich umfasst, der eine maximale Wahrscheinlichkeit als eine der Vielzahl von Funkeinheiten hat.

9. Vorrichtung nach Anspruch 7, wobei der Prozessor des Weiteren konfiguriert ist, um eine Funkeinheit auszuwählen, die einer Abdeckung entspricht, welche die größte Anzahl von Kandidatenbereichen enthält, die eine Wahrscheinlichkeit haben, die gleich oder größer als ein Schwellenwert einer der Vielzahl von Funkeinheiten ist.

10. Verfahren nach Anspruch 1 oder Vorrichtung nach Anspruch 6, wobei die Ausbreitungszeit des Signals aus den Timing Advance (TA)-Informationen bestimmt wird.

11. Verfahren nach Anspruch 1 oder Vorrichtung nach Anspruch 6, wobei der mindestens eine Bereich mindestens einen Bereich umfasst, dessen Wahrscheinlichkeit in Bezug auf das Signalstärkenmuster gleich oder größer als ein erster Schwellenwert unter vordefinierten Signalstärkenmustern, die den Kandidatenbereichen entsprechen, ist.

12. Verfahren nach Anspruch 1 oder Vorrichtung nach Anspruch 6, wobei der mindestens eine Bereich eine Vielzahl von Bereichen umfasst, deren Wahrscheinlichkeit in Bezug auf das Signalstärkenmuster gleich oder größer als ein erster Schwellenwert ist und ein gegenseitiger Wahrscheinlichkeits-Unterschied gleich als oder geringer als ein zweiter Schwellenwert unter vordefinierten Signalstärkenmustern, die den Kandidatenbereichen entsprechen, ist.

13. Vorrichtung nach Anspruch 6, die des Weiteren einen Empfänger zum Empfangen von Informationen in Bezug auf die Ausbreitungszeit des Signals und das Signalstärkenmuster umfasst.

14. Drahtloses Kommunikationssystem, das Folgendes umfasst:
eine Basisstation (110), die eine Vielzahl von Funkeinheiten umfasst, die eine bedienende Zelle bilden, wobei die Vielzahl von Funkeinheiten der bedienenden Zelle eine identische Zellenkennung verwendet;
ein Endgerät (100) zur Übertragung von Informationen in Bezug auf eine Ausbreitungszeit eines Signals und ein Signalstärkenmuster an die Basisstation über eine der Vielzahl von Funkeinheiten; und
ein Positionierungsmodul (120) zur Positionsschätzung des Endgeräts basierend auf der Ausbreitungszeit des Signals und dem Signalstärkenmuster,
wobei das Positionierungsmodul für Folgendes konfiguriert ist:
Bestimmen von Kandidatenbereichen basierend auf der Ausbreitungszeit des Signals zwischen dem Endgerät und einer Funkeinheit unter der Vielzahl von Funkeinheiten, und
Bestimmen mindestens eines Bereichs unter den Kandidatenbereichen als Standort des Endgeräts gemäß Signalstärkenwerten, die in dem Signalstärkenmuster für die Vielzahl von Funkeinheiten der bedienenden Zelle des Endgeräts enthalten sind und mindestens eine Funkeinheit der mindestens einen Nachbarzelle.

## Revendications

1. Procédé pour estimer une position d'un terminal (100) dans un système de communication sans fil, le procédé comprenant :
déterminer (301) des régions candidates sur la base d'un temps de propagation d'un signal entre le terminal et une unité radio parmi une pluralité d'unités radio (114-1,114-2,114-3;110,110-1,110-2,110-3,110-4; 151,152,153,154,155,156,157,158) formant une cellule de desserte, où la pluralité d'unités radio de la cellule de desserte utilise un identifiant de cellule identique ; et
déterminer (303) au moins une région parmi les régions candidates en tant que position du terminal selon un motif d'intensité de signal mesurée par le terminal pour la pluralité d'unités radio de la cellule de desserte et au moins une unité radio d'au moins une cellule voisine.

2. Procédé selon la revendication 1,
où les régions candidates comprennent une pluralité de groupes de régions candidates correspondant à la pluralité d'unités radio, et
où la détermination de l'au moins une région en tant que position du terminal comprend la détermination de la position du terminal parmi des régions candidates appartenant à une couverture de l'une de la pluralité d'unités radio.

3. Procédé selon la revendication 2, où la détermination de l'au moins une région en tant que position du terminal comprend,
la sélection d'une unité radio correspondant à une couverture incluant une région candidate ayant une vraisemblance maximale comme l'une de la pluralité d'unités radio.

4. Procédé selon la revendication 2, où la détermination de l'au moins une région en tant que position du terminal comprend,
la sélection d'une unité radio correspondant à une couverture incluant le plus grand nombre de régions candidates ayant une vraisemblance supérieure ou égale à un seuil comme celui de la pluralité d'unités radio.

5. Procédé selon la revendication 1, comprenant en outre la réception d'informations concernant le temps de propagation du signal et le motif d'intensité de signal.

6. Dispositif pour estimer une position d'un terminal (100) dans un système de communication sans fil, le dispositif comprenant :
un processeur (210) est configuré pour :
déterminer (301) des régions candidates sur la base d'un temps de propagation d'un signal entre le terminal et une unité radio parmi une pluralité d'unités radio (114-1,114-2,114-3;110,110-1,110-2,110-3,110-4;151,152,153,154,155,156,157,158) formant une cellule de desserte, où la pluralité d'unités radio de la cellule de desserte utilise un identifiant de cellule identique et
déterminer (303) au moins une région parmi les régions candidates en tant que position du terminal selon un motif d'intensité de signal mesurée par le terminal pour la pluralité d'unités radio de la cellule de desserte et au moins une unité radio d'au moins une cellule voisine.

7. Dispositif selon la revendication 6,
où les régions candidates comprennent une pluralité de groupes de régions candidates correspondant à la pluralité d'unités radio comprenant l'unité radio, et
où le processeur est configuré en outre pour déterminer la position du terminal parmi des régions candidates appartenant à une couverture de l'une de la pluralité d'unités radio.

8. Dispositif selon la revendication 7, où le processeur est configuré en outre pour sélectionner une unité radio correspondant à une couverture comprenant une région candidate ayant une vraisemblance maximale comme celle de la pluralité d'unités radio.

9. Dispositif selon la revendication 7, où le processeur est configuré en outre pour sélectionner une unité radio correspondant à une couverture comprenant le plus grand nombre de régions candidates ayant une vraisemblance supérieure ou égale à un seuil comme celui de la pluralité d'unités radio.

10. Procédé selon la revendication 1 ou dispositif selon la revendication 6, où le temps de propagation du signal est déterminé à partir d'informations d'avance temporelle, TA.

11. Procédé selon la revendication 1 ou dispositif selon la revendication 6, où l'au moins une région comprend au moins une région dont une vraisemblance par rapport au motif d'intensité de signal est supérieure ou égale à un premier seuil parmi des motifs d'intensité de signal prédéfinis correspondant aux régions candidates.

12. Procédé selon la revendication 1 ou dispositif selon la revendication 6, où l'au moins une région comprend une pluralité de régions dont une vraisemblance par rapport au motif d'intensité de signal est supérieure ou égale à un premier seuil et une différence de vraisemblance mutuelle est inférieure ou égale à un deuxième seuil parmi des motifs d'intensité de signal prédéfinis correspondant aux régions candidates.

13. Dispositif selon la revendication 6, comprenant en outre un récepteur pour recevoir des informations concernant le temps de propagation du signal et le motif d'intensité de signal.

14. Système de communication sans fil comprenant :
une station de base (110) comprenant une pluralité d'unités radio formant une cellule de desserte, où la pluralité d'unités radio de la cellule de desserte utilise un identifiant de cellule identique ;
un terminal (100) pour transmettre des informations concernant un temps de propagation d'un signal et un motif d'intensité de signal à la station de base à travers l'une de la pluralité d'unités radio ; et
un module de positionnement (120) pour estimer une position du terminal sur la base du temps de propagation du signal et du motif d'intensité de signal, où le module de positionnement est configuré pour :
déterminer des régions candidates sur la base du temps de propagation du signal entre le terminal et une unité radio parmi la pluralité d'unités radio, et
déterminer au moins une région parmi les régions candidates en tant que position du terminal selon des valeurs d'intensité de signal comprises dans le motif d'intensité de signal pour la pluralité d'unités radio de la cellule de desserte du terminal et d'au moins une unité radio d'au moins une cellule voisine.
